# EUROPEAN PATENT APPLICATION

(11) **EP 4 755 606 A1**
(43) Date of publication of application: **10.06.2026**
(21) Application number: 25220824.4
(22) Date of filing: 04.12.2025
(51) Int. Cl.: B29C 45/00, B29C 45/46, B29B 7/42, B29B 7/48, B29B 7/90, B29C 45/48, B29C 48/385, B29C 48/39, B29C 45/17, B29C 45/18

(54) **COMPOUND SYSTEM AND INJECTION MOLDING MACHINE INCLUDING THE SAME**

(30) Priority: 05.12.2024 JP 2024212572
(71) Applicant: Toyo Innovex Co., Ltd., Akashi-shi, Hyogo (JP)
(72) Inventor: INOUE, Makoto, Akashi-shi, Hyogo (JP); INOUE, Akira, Akashi-shi, Hyogo (JP)
(74) Representative: Pintz, György

(57) **Abstract**

A compound system (X) is configured with: a plasticizing unit (40) configured to perform melting of a thermoplastic resin (A) and conveyance to a downstream side; a mixing and kneading unit (42) provided on the downstream side of the plasticizing unit (40) and configured to mix an admixture (B) different from the thermoplastic resin into the molten thermoplastic resin (A) and to convey the mixture to a material receiving port (72) in an injection unit (44) of an injection molding machine body (Y); and a mounting base (80) configured to place the plasticizing unit (40) and the mixing and kneading unit (42). The mounting base (80) is provided with a movable mechanism (82) capable of freely moving the plasticizing unit (40) and the mixing and kneading unit (42) in respective planar directions.

## Description

### BACKGROUND OF THE INVENTION

### Field of the Invention

The present invention relates to a compound system to mix reinforcing fiber into a thermoplastic resin and an injection molding machine to form molded articles using such a thermoplastic resin in which reinforcing fiber is mixed.

### Description of the Related Art

From the past, techniques of mixing reinforcing fiber into a thermoplastic resin used for injection molding and supplying the mixture to an injection molding machine have been developed (e.g., PTL 1).

The injection molding machine according to PTL 1 is provided with a resin feeding section on an upstream side of one injection cylinder (screw conveyor) and with a reinforcing fiber feeding section on a downstream side and is configured to knead a thermoplastic resin in the injection cylinder while compressing and also to disperse a mass of reinforcing fiber in the thermoplastic resin while untangling.

PTL 1 refers to JP 2017-039243 A.

### SUMMARY OF THE INVENTION

However, performing both melting of the thermoplastic resin and mixing the melt with an admixture (e.g., reinforcing fiber) different from the thermoplastic resin in one injection cylinder has a risk of causing a problem in mixing of the thermoplastic resin with the admixture, including difficulty in obtaining molded articles with a desired strength due to, for example, frequent breaking of the reinforcing fiber.

To deal with such a risk, in the case of separately providing a plasticizing unit to perform melting of a thermoplastic resin and a mixing and kneading unit to perform mixing of an admixture, the plasticizing unit and the mixing and kneading unit are arranged in alignment with an injection molding machine body. In this case, there is a problem that the joint area of the outlet of the mixing and kneading unit and the material receiving port of the injection molding machine body has a risk of breaking unless these units are configured to smoothly move by being arranged in parallel in accordance with the forward and backward movement of the injection device of the injection molding machine body while it difficult to smoothly move the plasticizing unit and the mixing and kneading unit by arranging these units in parallel in such a manner.

In view of such a circumstance, one or more embodiments of the present disclosure provide a compound system that includes a plasticizing unit to perform melting of a thermoplastic resin, and separately, a mixing and kneading unit to perform mixing of an admixture and that is capable of smoothly moving both units in accordance with forward and backward movement of an injection device of an injection molding machine body, and provide an injection molding machine including the same.

A compound system according to an aspect of the present invention includes: a plasticizing unit configured to perform melting of a thermoplastic resin and conveyance to a downstream side; a mixing and kneading unit provided on the downstream side of the plasticizing unit and configured to mix an admixture different from the thermoplastic resin into the molten thermoplastic resin and to convey the mixture to a material receiving port in an injection unit of an injection molding machine body; and a mounting base configured to place the plasticizing unit and the mixing and kneading unit, wherein the mounting base is provided with a movable mechanism capable of freely moving the plasticizing unit and the mixing and kneading unit in respective planar directions.

It is preferred that the movable mechanism has: a parallel guide configured to move the plasticizing unit and the mixing and kneading unit parallel to a direction of extending the injection molding machine body; and an orthogonal direction guide configured to move the plasticizing unit and the mixing and kneading unit in a direction orthogonal to the parallel guide.

It is preferred that the plasticizing unit is arranged inclined to a direction of extending the injection molding machine body.

It is preferred that the plasticizing unit and the mixing and kneading unit are integrally coupled and fixed to each other.

An injection molding machine according to another aspect of the present invention includes: the compound system; and an injection molding machine body, wherein the injection molding machine body has an injection unit with a material receiving port formed to receive the molten thermoplastic resin containing the admixture supplied from the compound system.

In the compound system according to the present invention, the plasticizing unit to perform melting of the thermoplastic resin and the mixing and kneading unit to mix the admixture different from the thermoplastic resin into the molten thermoplastic resin are separately prepared, and it is thus possible to prevent a problem in mixing of the thermoplastic resin and the admixture and to obtain molded articles with desired strength.

In addition, since the mounting base to place the plasticizing unit and the mixing and kneading unit is provided with the movable mechanism capable of freely moving the plasticizing unit and the mixing and kneading unit in respective planar directions, it is possible to smoothly move both units in accordance with forward and backward movement of the injection unit of the injection molding machine body.

### BRIEF DESCRIPTION OF THE DRAWINGS

FIG. 1 is a diagram schematically illustrating an example of an injection molding machine 10 according to an embodiment.
FIG. 2 is a diagram schematically illustrating an example of an injection device 14 according to an embodiment.
FIG. 3 is a top view illustrating an example of the injection molding machine 10 according to an embodiment.
FIG. 4 is an enlarged top view illustrating an example of a compound system X according to an embodiment.

### DETAILED DESCRIPTION OF THE INVENTION

### Configuration of Injection Molding Machine 10

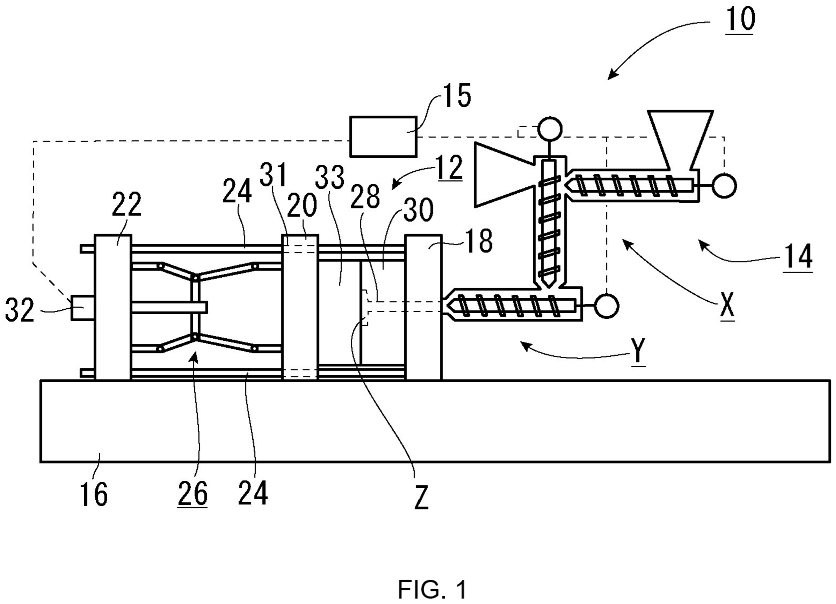

The injection molding machine 10 according to the present embodiment is a machine that repeats a molding cycle, such as mold closing, clamping, injection and filling of a molten resin, measurement, mold opening, and ejection of a molded article, to form molded articles, and as illustrated in FIG. 1, roughly includes a clamping device 12, the injection device 14, and a control device 15.

The clamping device 12 includes a base 16, a fixed plate 18, a movable plate 20, a pressure receiving plate 22, tie bars 24, and a toggle mechanism 26.

The base 16 is a member to be a foundation of other members configuring the clamping device 12 and the injection device 14.

The fixed plate 18 is fixed on the base 16, and to the fixed plate 18, a fixed mold 30 configuring a mold 28 is attached.

The movable plate 20 is a member to slide on the base 16 so as to move close to and away from the fixed plate 18, and to the movable plate 20, a movable mold 33 configuring the mold 28 is attached. The movable mold 33 contacts the fixed mold 30 to form a cavity Z to be filled with a molten resin.

The pressure receiving plate 22 is a member fixed on the base 16 on the opposite side to the fixed plate 18 viewed from the movable plate 20.

The tie bars 24 are round rod-shaped members, each having an end fixed to the fixed plate 18 and the other end fixed to the pressure receiving plate 22. The tie bars 24 are also inserted through tie bar insertion holes 31 formed in the movable plate 20 arranged between the fixed plate 18 and the pressure receiving plate 22. This allows the movable plate 20 to slide on the base 16 in a left-right direction in FIG. 1 along the tie bars 24. It should be noted that the tie bars 24 to be used include a plurality (e.g., four) of tie bars.

The toggle mechanism 26 is a mechanism to cause the movable plate 20 to move close to and away from the fixed plate 18, and a clamp driving device 32 is attached to the pressure receiving plate 22.

The movable plate 20 moves along the tie bars 24 (moves in the left-right direction in FIG. 1) by transmission of a driving force of the clamp driving device 32 through the toggle mechanism 26. When the movable plate 20 moves in the left direction, the movable mold 33 is separated from the fixed mold 30. Meanwhile, when the movable plate 20 moves in the right direction, the movable mold 33 abuts on the fixed mold 30 to form a cavity Z (internal space) inside the mold 28. Then, when a pressure in the direction of moving the movable plate 20 in the right direction is further applied, the fixed mold 30 and the movable mold 33 are clamped.

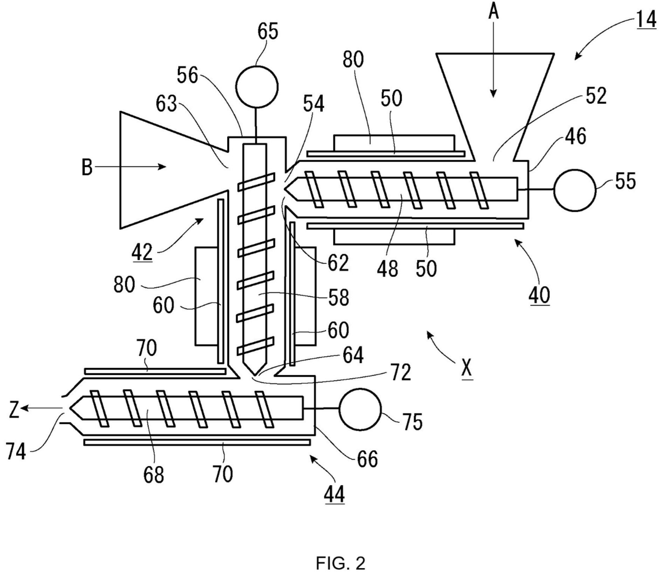

The injection device 14 is a device to inject a molten resin to fill the cavity Z inside the mold 28 formed by the movable mold 33 contacting the fixed mold 30, and as illustrated in FIG. 2, is configured with the compound system X, including a plasticizing unit 40 and a mixing and kneading unit 42, and with an injection unit 44 and a mounting base 80.

It should be noted that an injection molding machine body Y in the present embodiment is configured with the clamping device 12 and the injection unit 44 that are described above and is placed on the base 16.

The plasticizing unit 40 has a role of causing a supplied thermoplastic resin A to be in a completely molten state and has a heating cylinder 46, a plasticizing screw 48, a heater 50, a thermoplastic resin receiving port 52, a thermoplastic resin discharge port 54, and a plasticizing screw operation mechanism 55.

The heating cylinder 46 is a cylindrical member and has an end portion (upstream side: on the right in FIG. 2) provided with the thermoplastic resin receiving port 52 and the other end portion (downstream side: on the left in FIG. 2) provided with the thermoplastic resin discharge port 54 to discharge the molten thermoplastic resin A.

The plasticizing screw 48 is arranged inside the heating cylinder 46 and has a role of conveying the thermoplastic resin A received from the thermoplastic resin receiving port 52 to the thermoplastic resin discharge port 54.

The heater 50 is a heat source arranged at the outer periphery of the heating cylinder 46. The heat from the heater 50 and the plasticizing screw 48 cause the thermoplastic resin A in the heating cylinder 46 to be in a completely molten state.

It should be noted that the "completely molten state" through the entire description refers to a state where the molten resin contains no solids at all.

The plasticizing screw operation mechanism 55 rotates the plasticizing screw 48.

The mixing and kneading unit 42 has a role of receiving the thermoplastic resin A in the completely molten state by the plasticizing unit 40 and also receiving reinforcing fiber B for mixing and kneading the thermoplastic resin A and the reinforcing fiber B while heating and has a heating cylinder 56, a mixing and kneading screw 58, a heater 60, a molten thermoplastic resin receiving port 62, a reinforcing fiber receiving port 63, a material discharge port 64, and a mixing and kneading screw-operation mechanism 65.

The heating cylinder 56 is a cylindrical member and has an end portion (upstream side: on the upper side in FIG. 2) provided with the molten thermoplastic resin receiving port 62 and the reinforcing fiber receiving port 63 and the other end portion (downstream side: on the lower side in FIG. 2) provided with the material discharge port 64 to discharge the kneaded mixture (material) of the molten thermoplastic resin A and the reinforcing fiber B.

The mixing and kneading screw 58 is arranged inside the heating cylinder 56 and has a role of conveying the thermoplastic resin A received from the molten thermoplastic resin receiving port 62 and the reinforcing fiber B received from the reinforcing fiber receiving port 63 while mixing and kneading to the material discharge port 64.

The heater 60 is a heat source arranged at the outer periphery of the heating cylinder 56. The heat from the heater 60 causes the thermoplastic resin A in the heating cylinder 56 to maintain the completely molten state.

The mixing and kneading screw-operation mechanism 65 rotates the mixing and kneading screw 58.

The injection unit 44 has a role of further kneading the thermoplastic resin A and the reinforcing fiber B thus mixed and kneaded and injecting into the cavity Z of the clamping device 12, and has a heating cylinder 66, a kneading and injection screw 68, a heater 70, a material receiving port 72, a material injection port 74, and a kneading and injection screw-operation mechanism 75.

The heating cylinder 66 is a cylindrical member and has an end portion (upstream side: on the right in FIG. 2) provided with the material receiving port 72 to receive the kneaded mixture (material) of the molten thermoplastic resin A and the reinforcing fiber B and the other end portion (downstream side: on the left in FIG. 2) provided with the material injection port 74 to inject the material into the clamping device 12.

The kneading and injection screw 68 is arranged inside the heating cylinder 66 and has a role of kneading, dispersing, and measuring the material received from the material receiving port 72 for injecting from the material injection port 74.

The heater 70 is a heat source arranged at the outer periphery of the heating cylinder 66. The heat from the heater 70 causes the thermoplastic resin A in the heating cylinder 66 to maintain the completely molten state.

The kneading and injection screw-operation mechanism 75 rotates the kneading and injection screw 68 to perform kneading and dispersion of the material (the thermoplastic resin A and the reinforcing fiber B) in the injection unit 44. In addition, the kneading and injection screw-operation mechanism 75 performs measurement of the material and injection of the material by causing the kneading and injection screw 68 to move forward and backward.

The mounting base 80 is a base to place the plasticizing unit 40 and the mixing and kneading unit 42 and is provided with a movable mechanism 82 capable of freely moving the plasticizing unit 40 and the mixing and kneading unit 42 in respective planar directions.

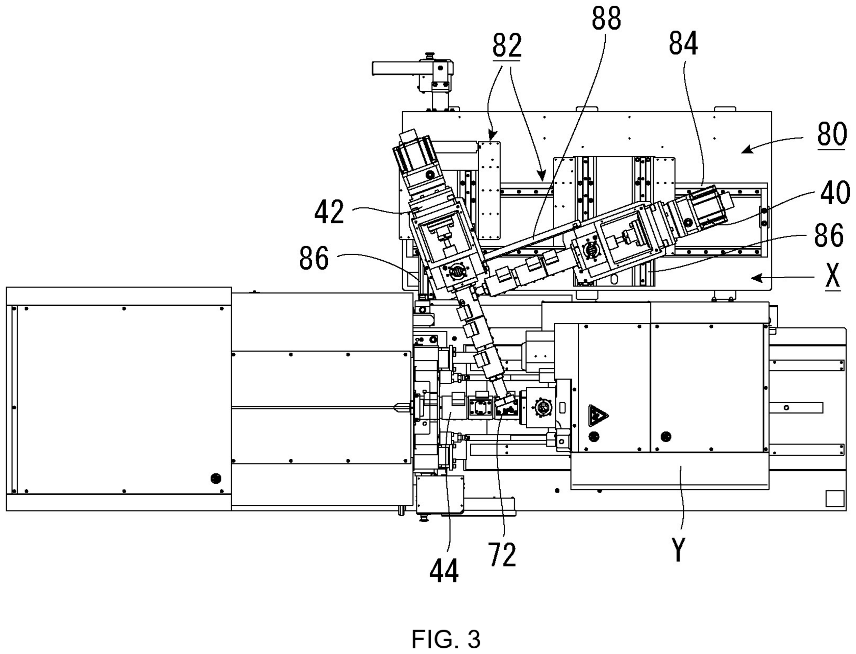

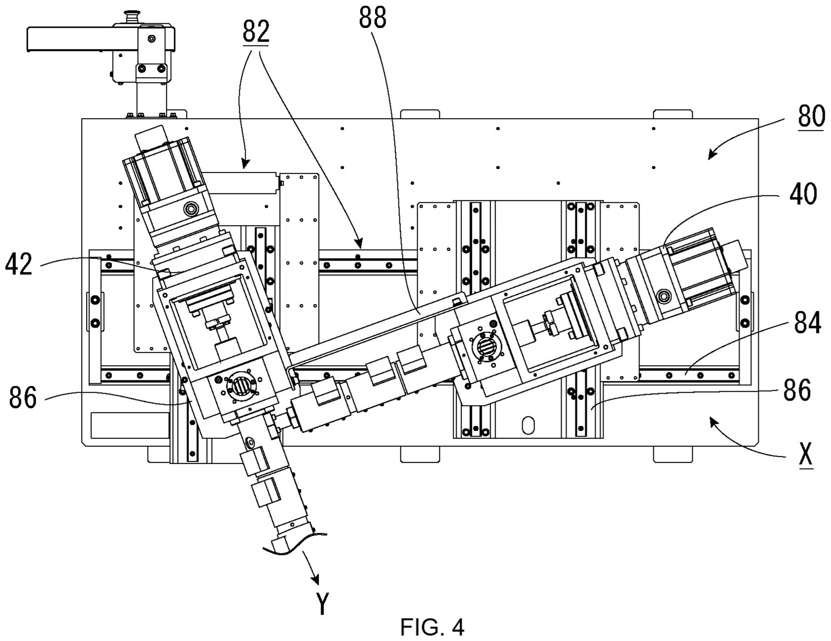

As illustrated in FIGs. 3 and 4, the movable mechanism 82 has: a parallel guide 84 configured to move the plasticizing unit 40 and the mixing and kneading unit 42 parallel to a direction of extending the injection molding machine body Y; and orthogonal direction guides 86 configured to move the plasticizing unit 40 and the mixing and kneading unit 42 in a direction orthogonal to the parallel guide 84. Of course, the movable mechanism 82 may be formed by a configuration different from the parallel guide 84 and the orthogonal direction guides 86.

Although so-called linear guides are used for the parallel guide 84 and the orthogonal direction guides 86 in the present embodiment, the kind of both guides 84, 86 is not limited to this. In addition, although the plasticizing unit 40 and the mixing and kneading unit 42 are respectively placed on the pair of orthogonal direction guides 86 located above the parallel guide 84 in common, both guides 84, 86 may use respective parallel guides 84 separately.

Moreover, in the present embodiment, the plasticizing unit 40 and the mixing and kneading unit 42 are integrally coupled and fixed to each other with an integration member 88 with an L-shaped cross section.

The coupling and fixing of the plasticizing unit 40 and the mixing and kneading unit 42 with the integration member 88 allows, when the mixing and kneading unit 42 moves in accordance with the forward and backward movement of the injection unit 44 as described later, integral movement of the plasticizing unit 40 and the mixing and kneading unit 42 while avoiding undesired stress exerted on the position of the thermoplastic resin discharge port 54 and the molten thermoplastic resin receiving port 62, which is the joint area of the mixing and kneading unit 42 and the plasticizing unit 40.

In addition, the plasticizing unit 40 in the present embodiment is arranged inclined to the direction of extending the injection molding machine body Y. Through the entire description, to be "arranged inclined" refers to the direction of extending the plasticizing unit 40 making an angle other than parallel or 90° with the direction of extending the injection molding machine body Y.

The plasticizing unit 40 arranged inclined to the direction of extending the injection molding machine body Y allows the plasticizing unit 40 and the mixing and kneading unit 42 to be arranged in a smaller space.

Although the control device 15 is a device to control the entire molding cycle by the injection molding machine 10, descriptions are given below only to control of the injection device 14 by the control device 15.

### Procedure for Injection Molding using Injection Molding Machine 10 according to this Embodiment

A description is then given to the procedure for injection molding molded articles using the injection molding machine 10 according to the embodiment described above, mainly to the procedure until injection of the material into the cavity Z by the injection device 14.

The plasticizing unit 40, the mixing and kneading unit 42, and the injection unit 44 configuring the injection device 14 are heated to predetermined temperatures respectively by the heater 50, the heater 60, and the heater 70.

In this situation, being heated by the heater 50, the heater 60, and the heater 70, respectively, the heating cylinder 46, the heating cylinder 56, and the heating cylinder 66 of the plasticizing unit 40, the mixing and kneading unit 42, and the injection unit 44 expand due to the thermal expansion.

The expansion of the heating cylinder 66 of the injection unit 44 causes the position of the material receiving port 72 to move, and following this, the mixing and kneading unit 42 is also moved by the movable mechanism 82. Moreover, the plasticizing unit 40 integrated to the mixing and kneading unit 42 by the integration member 88 is also moved by the movable mechanism 82.

Then, the thermoplastic resin A in pellets is charged into the thermoplastic resin receiving port 52 of the plasticizing unit 40.

The thermoplastic resin A thus charged is conveyed to the thermoplastic resin discharge port 54 of the plasticizing unit 40 by the plasticizing screw 48 and is turned into a completely molten state by the heat from the heater 50 and the plasticizing screw 48 during the conveyance.

The thermoplastic resin A in the completely molten state is discharged from the thermoplastic resin discharge port 54 and then supplied from the molten thermoplastic resin receiving port 62 to the mixing and kneading unit 42. In conjunction with this, the reinforcing fiber B is also supplied to the mixing and kneading unit 42 from the reinforcing fiber receiving port 63.

It should be noted that examples of the kind of reinforcing fiber B to be supplied to the mixing and kneading unit 42 include glass fiber, carbon fiber, and natural fiber.

The reinforcing fiber B supplied to the mixing and kneading unit 42 is conveyed to the material discharge port 64 by the mixing and kneading screw 58 while being mixed with the thermoplastic resin A in the completely molten state. During the conveyance, the heat from the heater 60 maintains the completely molten state of the thermoplastic resin A.

The material (mixture of the thermoplastic resin A and the reinforcing fiber B) discharged from the material discharge port 64 is supplied from the material receiving port 72 to the injection unit 44. The material is kneaded, dispersed, and measured in the injection unit 44, and then injected into the cavity Z of the clamping device 12 from the material injection port 74.

The material injected into the cavity Z is cooled in the cavity Z to be casted as a molded article. The finished molded article is ejected by opening the mold 28.

### Characteristics of Injection Molding Machine 10

According to the compound system X according to this embodiment, the plasticizing unit 40 to perform melting of the thermoplastic resin A and the mixing and kneading unit 42 to mix the reinforcing fiber B into the molten thermoplastic resin A are prepared separately, and it is thus possible to prevent frequent breaking of the reinforcing fiber B by hitting the thermoplastic resin A in an incompletely molten state and to obtain molded articles with desired strength.

In addition, since the mounting base 80 to place the plasticizing unit 40 and the mixing and kneading unit 42 is provided with the movable mechanism 82 capable of freely moving the plasticizing unit 40 and the mixing and kneading unit 42 in respective planar directions, it is possible to smoothly move both units 40, 42 in accordance with forward and backward movement of the injection unit 44 of the injection molding machine body Y.

### First Modification

Although the compound system X according to the embodiment described above is configured to charge the reinforcing fiber B into the mixing and kneading unit 42 to be mixed with the molten thermoplastic resin A, wood flour C may be mixed instead of the reinforcing fiber B.

That is, the mixing and kneading unit 42 receives the thermoplastic resin A turned into the completely molten state by the plasticizing unit 40 and also receives the wood flour C and thus has a role of mixing and kneading the thermoplastic resin A and the wood flour C while heating. Following this, the reinforcing fiber receiving port 63 turns into a wood flour receiving port 63. It should be noted that the wood flour C is not particularly limited as long as it has a fibrous property.

### Second Modification

Instead of the reinforcing fiber B and the wood flour C, a recycled material D may be mixed in the mixing and kneading unit 42.

That is, the mixing and kneading unit 42 receives the thermoplastic resin A turned into the completely molten state by the plasticizing unit 40 and also receives the recycled material D and thus has a role of mixing and kneading the thermoplastic resin A and the recycled material D while heating. Following this, the reinforcing fiber receiving port 63 turns into a recycled material receiving port 63. It should be noted that the recycled material D may be another thermoplastic resin to be melt in a different manner from the thermoplastic resin A or may be a material containing no fibers.

It should be noted that, herein, the materials to be mixed with the thermoplastic resin A in the completely molten state in the mixing and kneading unit 42, including the reinforcing fiber B, the wood flour C, and the recycled material D, are collectively referred to as an "admixture different from the thermoplastic resin A".

The one or more embodiments and modifications of the present disclosure are to be considered in all respects as illustrative, and not restrictive. The scope of the present invention is indicated by the appended claims rather than by the foregoing description and is intended to include all modifications in the meaning and scope equivalent to the claims.

## Claims

1. A compound system, comprising:
a plasticizing unit configured to perform melting of a thermoplastic resin and conveyance to a downstream side;
a mixing and kneading unit provided on the downstream side of the plasticizing unit and configured to mix an admixture different from the thermoplastic resin into the molten thermoplastic resin and to convey the mixture to a material receiving port in an injection unit of an injection molding machine body; and
a mounting base configured to place the plasticizing unit and the mixing and kneading unit, wherein
the mounting base is provided with a movable mechanism capable of freely moving the plasticizing unit and the mixing and kneading unit in respective planar directions.

2. The compound system according to Claim 1, wherein the movable mechanism has:
a parallel guide configured to move the plasticizing unit and the mixing and kneading unit parallel to a direction of extending the injection molding machine body; and
an orthogonal direction guide configured to move the plasticizing unit and the mixing and kneading unit in a direction orthogonal to the parallel guide.

3. The compound system according to Claim 1, wherein the plasticizing unit is arranged inclined to a direction of extending the injection molding machine body.

4. The compound system according to Claim 1, wherein the plasticizing unit and the mixing and kneading unit are integrally coupled and fixed to each other.

5. An injection molding machine, comprising:
the compound system according to any one of Claims 1 through 4; and
an injection molding machine body, wherein
the injection molding machine body has an injection unit with a material receiving port formed to receive the molten thermoplastic resin containing the admixture supplied from the compound system.
